Europäisches Patentamt

European Patent Office

Office européen des brevets

(11) Veröffentlichungsnummer : **0 064 722**
**B1**

(12) **EUROPÄISCHE PATENTSCHRIFT**

(45) Veröffentlichungstag der Patentschrift :
05.03.86

(21) Anmeldenummer : 82103798.3

(22) Anmeldetag : 04.05.82

(51) Int. Cl.⁴ : **C 08 B 11/20, C 08 B 31/12,**
**C 08 B 11/12, C 07 C 51/47**

(54) **Verfahren zur Reinigung von Wasser, Salze, Glykolationen und organische Lösemittel enthaltenden Gemischen und die Verwendung des Verfahrens bei der Herstellung von Natriumcarboxymethylgruppen aufweisenden Polysaccharidethern.**

(30) Priorität : 13.05.81 DE 3118953

(43) Veröffentlichungstag der Anmeldung :
17.11.82 Patentblatt 82/46

(45) Bekanntmachung des Hinweises auf die Patenterteilung : 05.03.86 Patentblatt 86/10

(84) Benannte Vertragsstaaten :
**BE DE FR GB IT NL SE**

(56) Entgegenhaltungen :
**FR-A- 2 217 307**
**US-A- 2 617 800**

(73) Patentinhaber : **HOECHST AKTIENGESELLSCHAFT**
**Postfach 80 03 20**
**D-6230 Frankfurt am Main 80 (DE)**

(72) Erfinder : **Perplies, Eberhard, Dr.**
**Rhönstrasse 11**
**D-6229 Walluf (DE)**

EP 0 064 722 B1

## Beschreibung

Die Erfindung betrifft ein Verfahren zur Reinigung (Aufarbeitung) von Wasser, wasserlösliche Salze, Glykolationen und organische Lösemittel enthaltenden Gemischen und die Verwendung dieses Verfahrens zur Aufbereitung der bei der Herstellung von Natriumcarboxymethylgruppen enthaltenden Polysaccharidethern anfallenden flüssigen Reaktions- und Auswaschmedien.

Glykolsäure oder ihre Salze werden großtechnisch häufig aus Monochloressigsäure durch alkalische Hydrolyse hergestellt. Eine damit prinzipiell vergleichbare Reaktion findet auch beim Einsatz von Monochloracetationen, die aus Monochloressigsäure oder deren Salzen resultieren, als Veretherungsmittel für hydroxylgruppenhaltige organische Verbindungen, z. B. für Polysaccharide wie Cellulose oder Stärke als Nebenreaktion statt, d. h. neben der Umsetzung der Monochloracetationen mit den Hydroxylgruppen der organischen Verbindungen unter Etherbildung werden auch einige Monochloracetationen zu Glykolationen (Hydroxyacetationen) hydrolysiert. Bei den immer wichtiger werdenden Anforderungen an eine möglichst geringe Abwasserbelastung der Umwelt ist es aber erforderlich, insbesondere organische Nebenprodukte von chemischen Reaktionen enthaltende Abwässer mit ihrem hohen chemischen Sauerstoffbedarf möglichst optimal zu reinigen, bevor diese an die Gewässer abgegeben werden. Gleichzeitig ist eine Destillation von organischen Lösemitteln, die häufig in chemischen Reaktionen als beispielsweise Verdünnungs- oder Dispergierhilfsmittel eingesetzt werden, verhältnismäßig energieaufwendig. Deshalb wird sehr intensiv nach Trenn-und Reinigungsverfahren gesucht, mit deren Hilfe Nebenprodukte von Reaktionen, flüssige Reaktionsmedien und/oder flüssige Auswaschmedien aufgearbeitet werden können ; dazu zählen beispielsweise Gemische, die insbesondere Salze, Wasser, organische Lösemittel, Säuren und/oder Basen enthalten. Aber auch die Abtrennung von kleineren Restmengen an Salzen, die bei chemischen Reaktionen und-/oder Neutralisationsstufen als Nebenprodukte entstehen, aus organischen Verbindungen ist oftmals erschwert, so daß wenig aufwendige Trennmethoden auch dort gesucht sind.

Aus dem Stand der Technik zur Herstellung der Carboxyalkylether von Polysacchariden, insbesondere von Cellulose, sind beispielsweise die folgenden Verfahren zu nennen, bei denen organische Lösemittel zugesetzt werden :

In der am 26. Oktober 1950 bekanntgemachten deutschen Patentanmeldung p 25819 IVc 1206 (= US-PS 2 517 577) wird ein Verfahren zur Herstellung von wasserlöslicher Natriumcarboxyalkylcellulose (NaCAlkC) beschrieben, bei dem einer Aufschlämmung von Cellulose, wäßriger Alkalimetallhydroxid-Lösung und Veretherungsmittel ein organisches Lösemittel zugesetzt wird. Als geeignete organische Lösemittel werden n-Propanol, Isopropanol, verschiedene Butanole, Aceton und Dioxan aufgeführt. Über die Aufarbeitung der organischen Lösemittel oder der Reaktionsnebenprodukte werden keine Ausführungen gemacht ; auch den jüngeren DE-AS 12 22 031 (= US-PS 3 284 441) und DE-OS 14 18 238 (= US-PS 3 069 409), die Modifizierungen des vorher dargestellten Verfahrens beschreiben, sind keine Angaben zur Aufarbeitung dieser Komponenten zu entnehmen.

Aus der DE-PS 12 39 284 ist ein Verfahren zur Herstellung von in Wasser leicht-gelierbarer Carboxymethylstärke (CMS) oder -amylose bekannt, bei dem die Veretherungsreaktion in einer Aufschlämmung durchgeführt wird, die Methanol, Ethanol, Aceton oder Isopropylalkohol enthält ; auch eine Aufarbeitung der zwischenzeitlich erzeugten Natriumcarboxymethylstärke (NaCMS) durch Aufschlämmung in einem wäßrigen, salzsauren, eines der genannten organischen Lösemittel enthaltenden Medium wird angeführt. Weitere Angaben zur Aufarbeitung der organischen Lösemittel oder der Reaktionsnebenprodukte sind der Beschreibung jedoch nicht zu entnehmen.

Das Verfahren zur Herstellung von Alkalisalzen der CMC gemäß der DE-OS 14 68 804 (= US-PS 3 361 740) wird in der Alkalisierungs- und Veretherungsstufe so durchgeführt, daß die Reaktionsaufschlämmung einen aliphatischen Alkohol mit 2 bis 4 C-Atomen und einen aromatischen Kohlenwasserstoff enthält. Über die Aufarbeitung der organischen Lösemittel oder der Reaktionsnebenprodukte werden keine Angaben gemacht.

In dem Verfahren zur Herstellung von Alkali-CMC nach der DE-OS 15 18 576 (= US-PS 3 347 855) wird als flüssiges Medium während der Alkalisierung und der Veretherung der Cellulose ein Wasser/Aceton-Gemisch eingesetzt, das nach beendeter Reaktion von den festen Reaktionsprodukten in einem Abscheider abgetrennt und in eine Aceton-Wiedergewinnungskolonne überführt wird. In dieser Kolonne wird überschüssiges Wasser aus dem Wasser/Aceton-Gemisch entfernt und das Aceton wieder in den Reaktionskreislauf zurückgeführt ; über die Aufarbeitung der Reaktionsnebenprodukte sind keine Angaben zu entnehmen.

Auch in der DE-OS 18 01 553, die den Einsatz eines Ethanol/Isopropanol-Gemischs in einem Verfahren zur Herstellung von Alkali-CMC beschreibt, wird weder auf die Aufarbeitung des Lösemittelgemischs noch auf die der Reaktionsnebenprodukte hingewiesen.

Aus der DE-AS 24 00 879 (= US-PS 4 017 671) und der DE-OS 25 57 576 sind die kontinuierliche bzw. diskontinuierliche Herstellung von NaCMC in einer isopropanol enthaltenden Reaktionsaufschlämmung bekannt, wobei nach Durchführung der Reaktion das wäßrige Isopropanol mechanisch von den festen Reaktionskomponenten abgetrennt und in das Reaktionsgemenge ohne zusätzliche Reinigung (z. B. Destillation) zurückgeführt werden kann. Über die Aufarbeitung der Reaktionsnebenprodukte sind keine Angaben zu entnehmen.

Unter dem Stichwort « Celluloseäther » in Ullmans Encyklopädie der technischen Chemie, Verlag Chemie — Weinheim, 4. Auflage — 1975, Band 9, Seiten 192 bis 212 wird zwar ausgeführt, daß (Seite 201, rechte Spalte) durch Verseifung von Veretherungsmitteln diese der eigentlichen Reaktion entzogen werden und dies deshalb eine erhebliche Belastung in der ökonomischen Kalkulation der Cellulose-veretherung bedeutet, und daß (Seiten 203/204) als Nebenprodukte der Veretherung von Cellulose mit Monochloressigsäure oder ihren Salzen zu NaCMC bzw. CMC — abhängig von der Reaktionsführung — im wesentlichen NaCl und Na-glykolat anfallen, über eine Aufarbeitung dieser Nebenprodukte ist jedoch kein Hinweis zu entnehmen. Bei der Beschreibung einer Reinigung von roher NaCMC wird angegeben, daß die dazu verwendeten organischen Lösemittel in einer kontinuierlichen Destillation gereinigt und wiederverwendet werden können.

Über die Aufarbeitung von Reaktionsgemischen, die Glykolsäure (Hydroxy-essigsäure), ihre Salze oder ähnliche Verbindungen und bei der Reaktion entstehende Nebenprodukte enthalten, sind beispielsweise die folgenden Druckschriften zu nennen :

In der DE-OS 23 05 170 wird ein dreistufiges Verfahren zur Herstellung wäßriger, hochkonzentrierter Glykolsäurenitrillösungen beschrieben, bei dem in den beiden ersten Stufen Blausäure an Formalin in einer temperaturgeregelten Kolonne bzw. einem temperaturgeregelten Behälter angelagert wird, und in der dritten Stufe die Reaktionsprodukte in einen Kationenaustauscher nachbehandelt werden. Im stark-sauren Ionenaustauscher werden die bei der Reaktion entstehenden Alkali- und Erdalkalikationen dem Reaktionsgemisch entzogen, die den Ionenaustauscher verlassende wäßrige Lösung weist einen pH-Wert von ≤ 2 auf.

Aus der DE-OS 25 29 170 (= US-PS 4 054 601) ist ein Verfahren zur Reinigung solcher wäßriger Rohglykolsäurelösungen bekannt, die durch saure und thermische Hydrolyse von Gylkolsäurenitril hergestellt wurden. Die rohe Glykolsäure wird dem salzhaltigen Reaktionsmedium durch Gegenstromextraktion mit einem organischen Lösemittelgemisch aus neutralem Phosphorsäureester (z. B. Tributylphosphat) und aliphatischem Ether (z. B. Diisopropylether) entzogen und aus dem Lösemittelgemisch erneut die Glykolsäure durch Gegenstromextration mit Wasser in Form einer wäßrigen Lösung gewonnen.

Bei der Herstellung von Glykolsäure aus den Mutterlaugen der Monochloressigsäureherstellung gemäß der DE-OS 28 10 906 wird das bei der thermischen Hydrolyse der gegebenenfalls neutralisierten Mutterlauge entstehende Reaktionsgemisch aus Glykolsäure, Dichloressigsäure, Wasser und Alkalichlorid mit einem möglichst wasserunlöslichen, organischen Lösemittel (wie einem Halogenkohlenwasserstoff) extrahiert. In dieser Extraktionsstufe wird dem Reaktionsgemisch im wesentlichen die Dichloressigsäure entzogen, in der wäßrigen Phase bleiben in der Hauptsache Glykolsäure und Alkalichlorid zurück, wobei ein großer Teil des Salzes durch Aufkonzentrieren der Lösung (z. B. durch vorsichtiges Abdestillieren des Wassers im Vakuum) in kristalliner Form abgeschieden und abgetrennt werden kann.

Nach der DE-OS 28 10 975 wird die zwangsläufige Entstehung von Salzen bei der alkalischen Hydrolyse von Monochloressigsäure dadurch umgangen, daß die Hydrolyse in Abwesenheit von Alkalimetallhydroxiden thermisch durchgeführt wird.

In den DE-OS 28 12 682 und DE-OS 28 12 683 wird zur Entfernung von Natriumchlorid aus wäßrigen Glykolsäurelösungen, die durch alkalische Hydrolyse von Monochloressigsäure erzeugt wurden, diesen Lösungen ein mit Wasser mischbares organisches Lösemittel (z. B. Aceton oder 1.4-Dioxan) oder ein mit Wasser nicht oder nur begrenzt mischbares organisches Lösemittel (z. B. Diethylketon, Methylisobutylketon oder Dibutylether) zugesetzt. Je nach der Art des organischen Lösemittels wird dann entweder dieses oder das Wasser durch Destillation aus dem Gemisch entfernt, das Natriumchlorid fällt entweder bereits bei Zugabe des organischen Lösemittels aus dem Gemisch aus oder erst beim Abdestillieren des Wassers. Neben der monomeren Glykolsäure werden bei den meisten der bisher beschriebenen Verfahren auch noch oligomere und polymere Formen (Glykolid, Polyglykolide) erhalten, die eine Lactid- bzw. Polyesterform darstellen.

Die aus dem Stand der Technik bekannten Verfahren weisen aber folgende Nachteile auf :

Die vollständige destillative Aufarbeitung von Wasser und organische Lösemittel enthaltenden Flüssigkeiten wie flüssigen Reaktions- oder Auswaschmedien kann zwar zu einer Rückgewinnung der eingesetzten organischen Lösemittel führen, sie ist aber sehr energieaufwendig und damit ein signifikanter Kostenfaktor.

Der bei einer destillativen Aufarbeitung dieser Flüssigkeiten zurückbleibende Destillationsrückstand (« Sumpf ») enthält — je nach Zusammensetzung des zu destillierenden flüssigen Gemisches — eine Vielzahl von Verbindungen, insbesondere Salze und schwerflüchtige organische Feststoffe, wobei die letzteren einen hohen chemischen Sauerstoffbedarf (CSB) des Abwassers zur Folge haben.

Eine Extraktion solcher Destillationsrückstände mit verschiedensten organischen Lösemitteln zur Abtrennung organischer Nebenprodukte (z. B. von Natriumglykolat oder Glykolsäure) von üblichen Salzen (z. B. von Natriumchlorid) führt wiederum zu der Problematik einer destillativen Aufbereitung von größeren Mengen an organischem Lösemittel.

Aufgabe der vorliegenden Erfindung ist es deshalb, ein ökonomisch und ökologisch günstiges Reinigungs (Aufarbeitungs)-Verfahren für Gemische auf der Basis von Wasser, wasserlöslichen Salzen, Glykolationen und organischen Lösemitteln vorzuschlagen. Ein solches Verfahren soll insbesondere bei der Aufbereitung von flüssigen Reaktions- und/oder Auswaschmedien bei der Herstellung von Natriumcarboxymethylgruppen als Substituenten aufweisenden Polysaccharidethern wie Cellulose- oder Stärkeethern eingesetzt werden können.

Die Erfindung geht aus von dem bekannten Verfahren zur Reinigung von Wasser, wasserlösliche Salze, Glykolationen und organische Lösemittel enthaltenden Gemischen durch Auftrennung in die Komponenten. Das erfindungsgemäße Verfahren ist dann dadurch gekennzeichnet, daß die Auftrennung der Komponenten an sauren und/oder basischen Ionenaustauschern durchgeführt wird. Insbesondere enthält das zu reinigende Gemisch Wasser, Natriumchlorid, Natriumglykolat und mindestens einen aliphatischen Alkohol mit 1 bis 6 C-Atomen.

In bevorzugten Ausführungsformen des erfindungsgemäßen Verfahrens werden entweder a) die Salze des zu reinigenden Gemischs zuerst in die Säureform überführt, beispielsweise durch Aufbringen auf einen stark-sauren Ionenaustauscher, und das saure Gemisch dann an einem schwach-basischen Ionenaustauscher aufgetrennt, oder b) das zu reinigende Gemisch zuerst an einem schwachbasischen Ionenaustauscher aufgetrennt, wonach einzelne Fraktionen, beispielsweise durch Aufbringen auf einen stark-sauren Ionenaustauscher, angesäuert werden können.

Als Ionenaustauscher können die handelsüblichen Typen auf Kunstharz-Basis eingesetzt werden, beispielsweise solche auf Polystyrol- oder Polyacrylatbasis (z. B. Styrol-Divinylbenzol-Copolymere oder Acrylat-Divinylbenzol-Copolymere) mit üblicherweise folgenden Festionen: —$SO_3^-$-Ionen für stark-saure Kationenaustauscher, —$COO^-$-Ionen für schwach-saure Kationenaustauscher, —$NR_3^{\oplus}$-Ionen (z. B R = —$CH_3$ oder —$CH_2$—$CH_2$—OH) für stark-basische Anionenaustauscher und —$N(CH_3)_2H^{\oplus}$, —$NH_3^{\oplus}$ oder > $NH_2^{\oplus}$ für schwach-basische Anionenaustauscher. Im erfindungsgemäßen Verfahren kommen bevorzugt die folgenden Ionenaustauscher in Betracht:

stark-saure Kationenaustauscher auf Polystyrolsulfonsäure-Basis in Gelform (z. B. ® Amberlite IR 120 der Rohm & Haas Co. - Philadelphia / USA oder ® Permutit RS-12 der Permutit GmbH - Berlin / DE) oder in makroporöser Form (z. B. ® Permutit RSP-100),

schwach-basische Anionenaustauscher auf acrylischer Basis mit tertiären Aminogruppen in Gelform (z. B. ® Amberlite IRA 67 oder IRA 93) oder auf Polystyrol-Basis mit tertiären Aminogruppen in makroporöser Form (z. B. ® Permutit EM-13).

Weitere Arten von Ionenaustauschern, die in dieser Technologie verwendeter Begriffe und Definitionen und die Arbeitsweise mit Ionenaustauschern sind beispielsweise aus Ullmanns Enclyklopädie der technischen Chemie, 4. Auflage — Band 13, Verlag Chemie — Weinheim, 1977, Stichwort « Ionenaustauscher », Seiten 279 bis 341 zu entnehmen ; wegen weiterer Einzelheiten wird auf dieses Standardwerk verwiesen.

Die zu reinigenden Gemische enthalten neben Wasser noch wasserlösliche Salze, beispielsweise Alkalimetallchloride, oder -nitrate, Glykolationen (aus Glykolsäure oder ihren Salzen resultierend) und organische Lösemittel wie Aceton, Methanol, Isopropanol, Dioxan und/oder Methylethylketon. Bei der Reinigung (Aufarbeitung) dieser Gemische durch die erfindungsgemäße Auftrennung an sauren und/oder basischen Ionenaustauschern können die Komponenten so isoliert werden, daß sie wiederverwendet werden können, d. h. die organischen Lösemittel können beispielsweise wieder als solche verwendet werden, und die Glykolsäure kann als wohlfeiles Produkt in den Handel gebracht werden. Durch das erfindungsgemäße Verfahren ist also möglich, einerseits eine aufwendige Destillation aller anfallenden Flüssigkeitsmengen zu umgehen, um organische Lösemittel rückzugewinnen, andererseits aber auch ein wohlfeiles Nebenprodukt wie die Glykolsäure in reiner Form zu gewinnen, und dabei gleichzeitig eine starke Abwasserbelastung der Umwelt zu umgehen. Es ist dabei überraschend, daß bei dem erfindungsgemäßen Einsatz von Ionenaustauschern gleichzeitig eine Auftrennung in eine elektrisch neutrale organische Verbindung wie einen Alkohol und verschiedene Arten von Salzen bzw. Säuren möglich wird. Für die Praxis ist es auch bedeutsam, daß die einzusetzenden Ionenaustauscher über lange Zeiträume regeneriert und wiederverwendet werden können, ohne wesentlich an Wirkung einzubüßen.

Das erfindungsgemäße Verfahren findet insbesondere Verwendung zur Aufarbeitung der flüssigen Reaktions- und/oder Auswaschmedien bei der Herstellung von Natriumcarboxymethylgruppen als Substituenten aufweisenden Polysaccharidethern aus Polysacchariden (wie Cellulose, Stärke, Dextrin oder Dextran), einem Alkalimetallhydroxid und Monochloracetationen in einem Wasser und mindestens ein organisches Lösemittel enthaltenden Medium. Wegen weiterer Einzelheiten zu den Verfahren der Herstellung dieser Polysaccharidether wird auf den eingangs dargestellten Stand der Technik verwiesen. Die bei der Veretherungsreaktion entstehenden Roh-Carboxymethylpolysaccharide weisen in der Praxis an Begleitstoffen neben unlöslichen Abbauprodukten der Polymeren auch Verunreinigungen durch wasserlösliche Nebenprodukte auf, wozu hauptsächlich Alkalimetallchloride wie NaCl und Alkalimetallglykolate wie Natriumglykolat gehören. Beim Ansäuern der normalerweise alkalisch vorliegenden Reaktionsgemische mit beispielsweise Salpetersäure können noch weitere Fremddionen in das System eingebracht werden. Durch eine sich anschließende Reinigungsoperation der Roh-Carboxymethylpolysaccharide mit wasserhaltigen organischen Lösemitteln wie wäßrigem Methanol oder wäßrigem Isopropanol können die Fremdsalze größtenteils aus den Carboxymethylpolysacchariden entfernt werden. Dadurch fallen aber neben dem flüssigen Reaktionsmedium auf der Basis von Wasser/organischem Lösemittel zusätzliche Flüssigkeitsmengen durch die Auswaschstufe(n) an, die bisher nur destillativ aufgetrennt werden können, aber durch die nichtflüchtigen organischen Verunreinigungen doch zu einer gewissen Abwasserbelastung führen. Für diese großtechnisch bedeutsamen Verfahren, beispielsweise zur Herstellung von Natriumcarboxymethylcellulose (NaCMC) oder -stärke (NaCMS) stellt deshalb das erfindungsgemäße Verfahren — durch den weitgehenden Verzicht auf energieaufwendige Destillationen, die Wiederverwendung von organischen Lösemitteln im Kreislauf und die Nichtbelastung des Abwassers mit organischen Schadstoffen — einen wichtigen Beitrag zur Kostensenkung und zur umweltfreundlichen Beseitigung von « Abfallstoffen » dar.

Das erfindungsgemäße Verfahren und seine bevorzugte Verwendung werden anhand der folgenden Beispiele näher erläutert. Prozentangaben beziehen sich dort auf das Gewicht, und Gew.-Teile verhalten sich zu Vol.-Teilen wie g zu cm³.

Beispiel 1

Es werden 175 Vol.-Teile eines 75 %igen wäßrigen Methanols mit einem Salzgehalt von 3,2 % NaCl und 1,6 % Naglykolat (als Auswaschmedium von Roh-NaCMC eingesetzt) auf eine Säule gegeben, die 600 Vol.-Teile eines schwachbasischen Anionenaustauschers auf acrylischer Basis mit tertiären Aminogruppen in Gelform (® Amberlite IRA 93) enthält ; die Eluation erfolgt mit Wasser, das mit verdünnter wäßriger NaOH-Lösung auf einen pH-Wert von etwa 9 eingestellt wurde. Während des Aufgebens des aufzutrennenden Gemischs und in der ersten Phase der Eluation wird ein alkalisch-wäßriges Methanol eluiert, das nach Behandlung in einem stark-sauren Kationenaustauscher als salzfreies organisches Lösemittel wieder als Auswaschmedium für Roh-NaCMC eingesetzt werden kann. In einem Bereich von etwa 450 bis etwa 1 000 Vol.-Teilen Eluat (mit einem Maximum bei etwa 650 Vol.-Teilen) folgt eine Fraktion, in der das Naglykolat mit 68,8 Gew.-% der Ausgangsmenge deutlich angereichert ist, gleichzeitig werden 26,3 % des NaCl miteluiert. Nach der Behandlung dieses Eluats mit einem stark-sauren Kationenaustauscher, Abdestillieren des Rest-Methanols und destillativer Aufkonzentrierung kann eine handelsübliche 57 %ige NaCl-haltige wäßrige Glykolsäure gewonnen werden, wobei das Produkt nach üblichen Methoden (z. B. mit Aktivkohle) entfärbt werden kann.

Beispiel 2

Es werden 7 500 Vol.-Teile eines 65 %igen wäßrigen Isopropanols mit einem Salzgehalt von 0,6 % NaCl und 0,4 % Naglykolat (als flüssiges Reaktionsmedium von einer Roh-NaCMC abgetrennt) über eine Säule gegeben, die 600 Vol.-Teile eines stark-sauren Kationenaustauschers enthält. Das derart angesäuerte und noch aufzutrennende Gemisch wird anschließend über eine Säule eluiert, die 350 Vol.-Teile eines schwachbasischen Anionenaustauschers auf Polystyrolbasis mit tertiären Aminogruppen in makroporöser Form (® Permutit EM-13) enthält. Zunächst werden 4 500 Vol.-Teile eines reinen wäßrigen Isopropanols einer Leitfähigkeit von weniger als 4,5 μS gewonnen, die folgenden etwa 1 800 Vol.-Teile bestehen aus verdünnter isopropanolischwäßriger Glykolsäurelösung mit einem Maximum im Glykolsäure-Gehalt bei etwa 6 300 Vol.-Teilen Eluat mit gleichzeitigem Beginn und stetiger Steigerung des Salzsäuregehalts in der Gylkolsäure-Lösung ab diesem Maximum. Das wäßrige Isopropanol der ersten 4 500 Vol.-Teile an Eluat kann unmittelbar wieder zur Herstellung von NaCMC verwendet werden, ohne dazu bereits eine Ballastrate an Nebenprodukten mitzubringen. Die isopropanolisch-wäßrige Gylkolsäurelösung kann destillativ in das azeotrope Wasser/Isopropanol-Gemisch und wäßrige NaCl-freie Gylkolsäure getrennt werden, wobei das Produkt nach üblichen Methoden (z. B. mit Aktivkohle) entfärbt werden kann.

**Patentansprüche**

1. Verfahren zur Reinigung von Wasser, wasserlösliche Salze, Glykolationen und organische Lösemittel enthaltenden Gemischen durch Auftrennung in die Komponenten, dadurch gekennzeichnet, daß die Auftrennung der Komponenten an sauren und/oder basischen Ionenaustauschern durchgeführt wird.

2. Verfahren nach Anspruch 1, dadurch gekennzeichnet, daß das zu reinigende Gemisch Wasser, Natriumchlorid, Natriumglykolat und mindestens einen aliphatischen Alkohol mit 1 bis 6 C-Atomen enthält.

3. Verfahren nach Anspruch 1 oder 2, dadurch gekennzeichnet, daß die Salze des Gemischs in die Säureform überführt werden und das saure Gemisch an einem schwachbasischen Ionenaustauscher aufgetrennt wird.

4. Verfahren nach Anspruch 1 oder 2, dadurch gekennzeichnet, daß das Gemisch an einem schwach-basischen Ionenaustauscher aufgetrennt wird.

5. Verwendung des Verfahrens nach einem der Ansprüche 1 bis 4 zur Aufarbeitung der flüssigen Reaktions- und/oder Auswaschmedien bei der Herstellung von Natriumcarboxymethylgruppen als Substituenten aufweisenden Polysaccharidethern aus Polysacchariden, einem Alkalimetallhydroxid und Monochloracetationen in einem Wasser und mindestens ein organisches Lösemittel enthaltenden Medium.

## Claims

1. A process for the purification of mixtures which contain water, water-soluble salts, glycolate ions and organic solvents by separating the mixtures into the components, which process comprises separating the components on acidic and/or basic ion exchangers.

2. The process as claimed in claim 1, wherein the mixture to be purified contains water, sodium chloride, sodium glycolate and at least one aliphatic alcohol having 1 to 6 C atoms.

3. The process as claimed in claim 1 or 2, wherein the salts of the mixture are converted into the acid form, and the acidic mixture is separated on a weakly basic ion exchanger.

4. The process as claimed in claim 1 or 2, wherein the mixture is separated on a weakly basic ion exchanger.

5. Use of the process as claimed in any one of claims 1 to 4 for the working-up of liquid reaction media and/or washing media in the preparation of polysaccharide ethers, which contain sodiumcarboxymethyl groups as substituents, from polysaccharides, an alkali metal hydroxide and monochloroacetate ions in a medium containing water and at least one organic solvent.

## Revendications

1. Procédé de purification de mélanges contenant de l'eau, des sels solubles dans l'eau, des ions glycolate et des solvants organiques par séparation en leurs constituants, caractérisé en ce que la séparation des constituants est réalisée sur des échangeurs d'ions acides et/ou basiques.

2. Procédé selon la revendication 1, caractérisé en ce que le mélange à purifier contient de l'eau, du chlorure de sodium, du glycolate de sodium et au moins un alcool aliphatique ayant 1 à 6 atomes de carbone.

3. Procédé selon la revendication 1 ou 2, caractérisé en ce que les sels du mélange sont convertis en la forme acide et en ce que le mélange acide est séparé sur un échangeur d'ions faiblement basique.

4. Procédé selon la revendication 1 ou 2, caractérisé en ce que le mélange est séparé sur un échangeur d'ions faiblement basique.

5. Emploi du procédé selon l'une des revendications 1 à 4 pour le traitement des milieux de réaction et/ou de lavage liquides dans la fabrication d'éthers de polysaccharides comportant comme substituants des groupes carboxyméthyl-sodium à partir de polysaccharides, d'un hydroxyde de métal alcalin et d'ions monochloroacétate dans un milieu contenant de l'eau et au moins un solvant organique.